# EUROPEAN PATENT APPLICATION

(11) **EP 1 071 045 A1**
(43) Date of publication of application: **24.01.2001**
(21) Application number: 00420147.1
(22) Date of filing: 04.07.2000
(51) Int. Cl.: G06T 15/20, G06T 7/00

(54) **Device and process for displaying an image on a screen according to a perspective that depends on the user's position**

(30) Priority: 22.07.1999 FR 9909691
(71) Applicant: EASTMAN KODAK COMPANY, Rochester, New York 14650 (US)
(72) Inventor: Philiponet, Etienne Pierre, Kodak Industrie, 71102 Chalon sur Saône (FR)
(74) Representative: Leray, Noelle

(57) **Abstract**

The present invention relates to a device and a process for displaying an image representing an object in three dimensions on a screen according to a perspective that depends on the user's (10) position.

The device comprises:
a screen (20) intended for displaying the image;
a means (30) for detecting the position of the user;
a means (40) for generating an image of the object according to a perspective that depends on the user's (10) position so that when the user moves in front of the screen (20), the image of the object is modified,
the means (30) for detecting the user's (10) position comprising:
at least one recording system (31) intended to record the user's image;
a means (32) for processing the recorded data so as to determine the user's (10) position in relation to the screen (20).

## Description

The present invention relates to a device and a process for displaying an image representing an object in three dimensions on a screen according to a perspective that depends on the user's position.

US Patent 5,367,614 describes a system that enables an image in three dimensions to be displayed with variable perspective. The perspective varies according to movements of the user's head. This device is used to represent an object so that the user looks at it as he/she were looking at a real object and not an object represented on a screen. The system utilized comprises an ultrasound transmitter intended to be put on the user's head and to emit sound waves, and one or more receivers intended to be arranged on the screen and to receive these waves. The transmitter and receiver are connected to an interface intended to analyze the signals and especially to calculate the time between the moment when the sound wave is emitted and the moment when it is received.

Such a device can easily be influenced by the user's external environment, i.e. the receiver receives sound waves coming from other sound sources than the transmitter. In addition, such a device has to be worn by the user, which is not very practical.

An object of the invention is to provide a device and a process intended to give the impression to a user who is looking at an object in three dimensions on a screen of looking at a real object, which do not have the disadvantages of the background art.

The present invention relates to a device for displaying an image of an object according to a perspective that depends on the position of a user looking at the image, the device comprising:
a screen intended for displaying the image;
a means for detecting the position of the user which comprises at least one recording system intended to record the user's image and a means for processing the recorded data so as to determine the variation of the user's position in relation to the screen; and
a means for generating an image of the object according to a perspective that depends on the user's position so that the image of the object is modified when the user moves in front of the screen.

The present invention also relates to a device for displaying an image of an object according to a perspective that depends on the position of a user looking at the image, the device comprising:
a screen intended for displaying the image;
at least one recording system intended to record the user's image;
a processor for processing the recorded data so as to determine the variation of the user's position in relation to the screen; and
a processor for generating an image of the object according to a perspective that depends on the user's position so that the image of the object is modified when the user moves in front of the screen.

The present invention also relates to a process for displaying an image of an object according to a perspective that depends on the position of a user looking at the image, the process comprising the steps of:
displaying the image of the object on a screen;
recording at least one image of the user by means of a recording system;
determining the variation in the user's position in relation to the screen; and
utilizing an algorithm to enable the image of the object displayed on the screen to be modified according to the variation of the user's position in relation to the screen.

Other characteristics will appear on reading the description below, with reference to the drawings wherein:
Figure 1 represents a diagrammatic view of a first embodiment of the device according to the invention;
Figure 2 represents a top view of the first embodiment of the invention device;
Figure 3 represents an image of the user recorded by the first embodiment of the invention device;
Figure 4 represents a perspective view of the first embodiment of the invention device;
Figure 5 represents a diagrammatic view of a second embodiment of the invention device;
Figure 6 represents a top view of the second embodiment of the invention device; and
Figures 7a and 7b represent images of the user recorded by the second embodiment of the invention device.

The invention device is intended for displaying an image of an object on a screen according to a perspective that depends on the position of the user who is looking at the image.

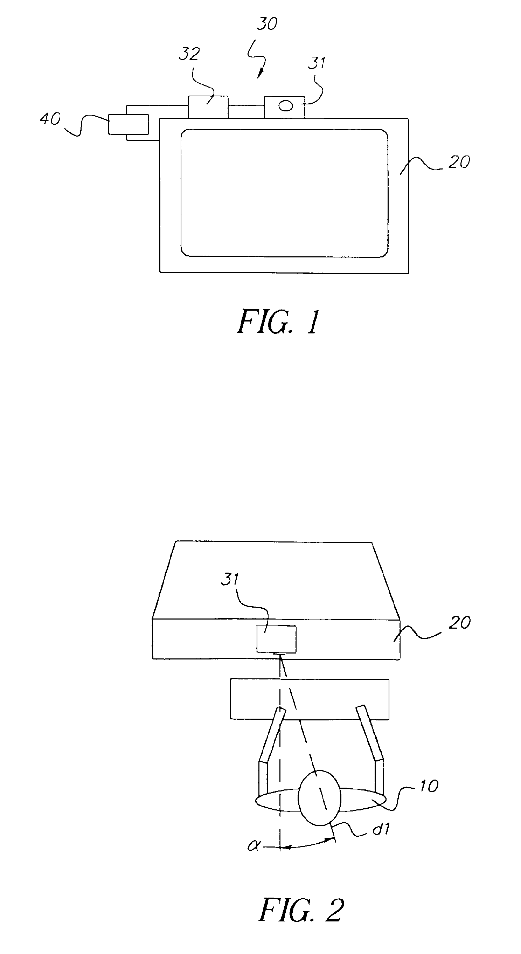

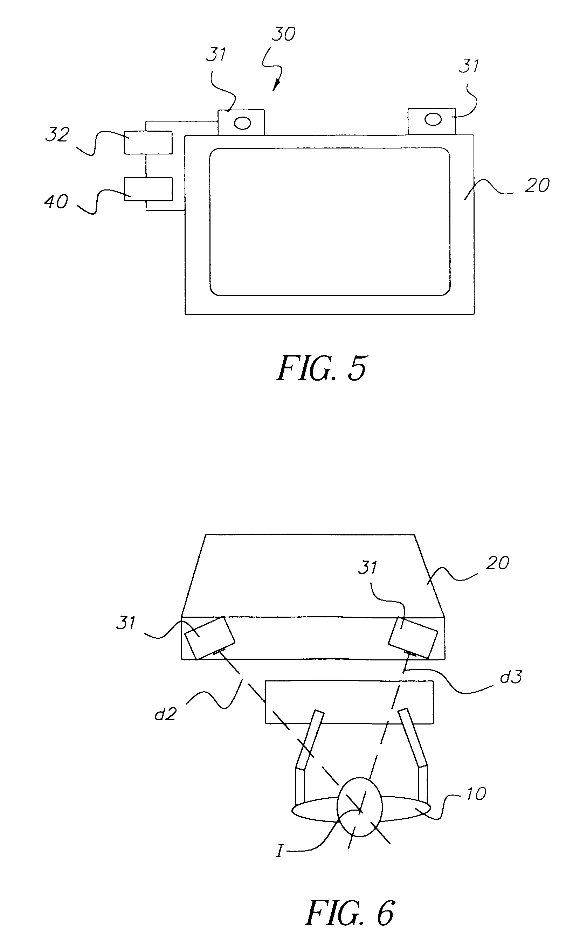

With reference to Figures 1 and 5, it can be seen diagrammatically that the device comprises a screen 20 on which an object is displayed. The user 10 of the device is placed opposite the screen 20 so as to look at the object. In order to give the impression to the user 10 that he/she is looking at a real object, the device of the present invention proposes to modify the perspective by which the object is displayed on the screen 20 according to the user's position 10 in relation to the screen 20. Hence the device comprises a means 30 for detecting the user's position 10 and in particular the position of the user's face 10. The means 30 for detecting the user's position 10 comprises at least one recording system 31 intended to record continuously and digitally the image of the user's face 10. This is for instance a digital camera, e.g. a KODAK DVC 323 camera. The device also comprises a means 32 for processing the data recorded by the camera 31 so as to determine the user's position 10 in relation to the screen 20. As the user's image 10 is recorded continuously, the means 32 for processing the recorded data enables the user's position 10 in relation to a reference position to be determined at any time. When the position is determined, data is generated according to which a means 40 for generating an image of the object will modify the image of the object.

The invention process comprises the following steps. After having initialized the system the image of the object is displayed on the screen 20. By means of at least one recording system 31 an image of the user 10 is recorded. Then the variation of the user's position 10 in relation to the screen 20 is determined. Then an algorithm is utilized that enables the image of the object displayed on the screen 20 to be modified according to the variation of the user's position 10 in relation to the screen 20. To determine the variation of the user's position 10 in relation to the screen 20 several embodiments are proposed. First variations of angular position can be determined in a horizontal and/or vertical plane. Also, independently or in addition, variations of distance between the user 10 and the screen 20 can be determined.

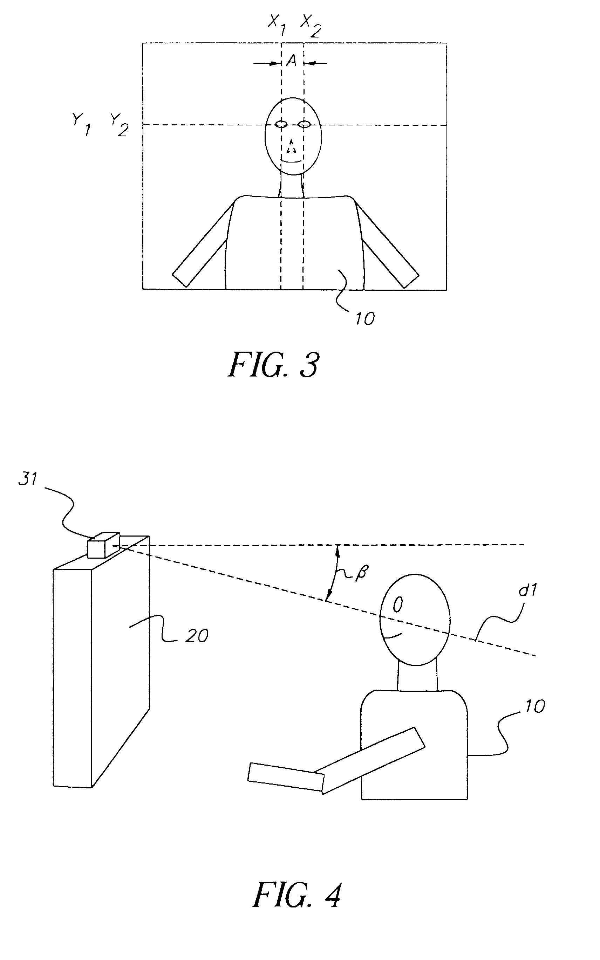

According to a first embodiment illustrated diagrammatically in Figure 1, the device comprises a single recording system 31. This is a digital camera arranged for instance centrally on top of the display screen 20. Clearly the camera can be placed in any other location that enables the image of the user's face 10 to be recorded. The face is recorded in one direction. To determine angular variations of the user 10 in relation to the screen 20, the means 32 for processing the data is a means for registering a characteristic point of the user 10, preferably on his/her face. For example the following can be selected: the nose, the center between the two eyes, or the barycenter of the flesh tints of the face. Any recognition process known to those skilled in the art can be utilized for this purpose. According to a particular embodiment, the position of the two points corresponding to the eyes is determined. At the start of utilization, the image of the user's face 10 recorded by the camera 31 is displayed on the screen 20. At this moment the user 10 is invited to initialize the system, for instance by generating one or more pulses. For example it can be envisaged that the user 10 clicks on the two points corresponding to the eyes. At the same time as he/she initializes the system, the two points are thus registered in a system of coordinates attached to the image recorded by the camera 31 as illustrated in Figure 3. Thus two couples (X₁, Y₁) and (X₂, Y₂) are obtained. By calculating the coordinates of the couple [(X₁ +X₂)/2; (Y₁ +Y₂)/2], the coordinates of the center between the two eyes are determined. Then the axis d₁ between the characteristic point of the user's face 10 and the center of the camera 31 is determined. A value α is then attributed to the angle, measured in a horizontal plane, between this axis d₁ and the camera's optical axis as illustrated in Figure 2. Advantageously, a value β is attributed to the angle, measured in a vertical plane, between this axis d₁ and the camera's optical axis as illustrated in Figure 4. When for instance the user moves his/her head in a horizontal and/or vertical plane, the coordinates of the couple [(X₁ +X₂)/2; (Y₁ +Y₂)/2] vary so that the angle α and/or β varies. An algorithm is then utilized to modify the image of the object to be looked at on the screen 20 according to the variation of the angle α and/or β so as to rotate the object by a certain angle, i.e. to represent the object according to a given perspective. Advantageously, to simulate reality approximately, two points separated by a known mean distance can be registered, e.g. the distance between the two eyes. From this distance, the user's position on the axis d₁ is determined. Also knowing the position of the camera 31 in relation to the center of the screen, the approximately actual angles of variations of the user in relation to the screen can be deduced. Thus, the object can be rotated by this actual variation of angle so that reality is simulated. The object can also be moved by twice the angle or by another proportion.

According to this embodiment, advantageously in addition, the variations of distance between the user 10 and the screen 20 are determined. Therefore, two characteristic points of the user's image 10 are determined and the variation of the distance between these two points, e.g. the two eyes, is registered. For instance when the user 10 initializes the system, an arbitrary value A can be attributed to the distance between the user 10 and the screen 20. In reality this reference value is attributed to the distance between the two eyes (X₂-X₁, Y₂-Y₁) according to our example as illustrated in Figure 3. Thus, when for instance, the user 10 approaches or retreats from the screen 20, the distance between the two points measured will increase or decrease in relation to the reference value. According to the variation of this distance, an algorithm is utilized to enable the displayed object to be modified so that it is displayed by being enlarged or reduced. Clearly any distance between two characteristic points of the face can be utilized to register the variation of distance between the screen 20 and the user 10.

According to this embodiment, when the user 10 only rotates his/her head in a plane parallel to the screen, the object is not modified. In fact, the distance (X₂-X₁, Y₂-Y₁) between the two eyes is not modified. Similarly the angles α and β are practically not modified because the whole head is not moved.

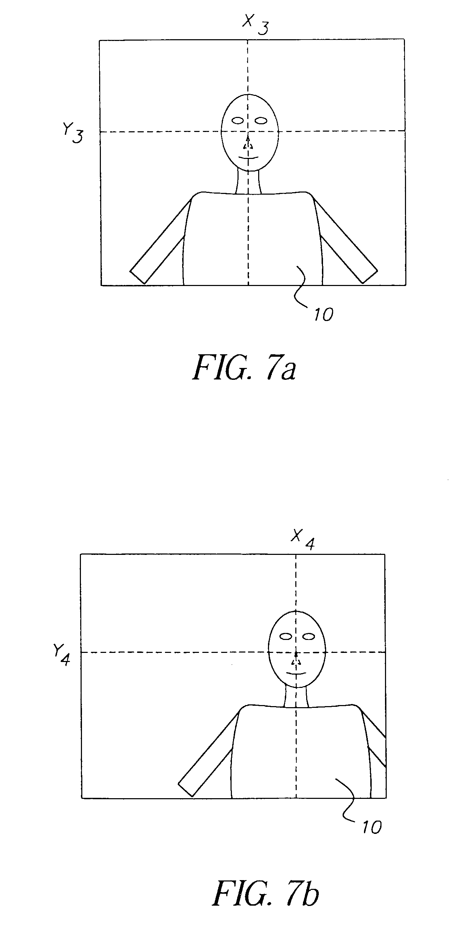

According to a second embodiment illustrated diagrammatically in Figure 5, the device comprises two recording systems 31. These are two digital cameras arranged for instance on top of the screen 20 and oriented at two different angles so as to record two different images of the user 10. Before an image is recorded, the user 10 is invited to initialize the device, for instance by generating a pulse. At this moment, each recording system 31 then records one image of the user's face 10 as illustrated in Figures 7a and 7b.

In order to register the variations of the user's position 10, the means 32 for processing the data is for example a means for registering a characteristic point of the user 10, preferably his/her face in the two recordings. For instance the flesh tints of the face can be registered, and the barycenter of the face calculated. To that end, the value of each pixel representing flesh tints is taken as one. The coordinates of these pixels are added to each other and divided by the number of pixel representing flesh tints. Thus the coordinates (X₃, Y₃) and (X₄, Y₄) of the barycenter are obtained in the system of coordinates associated with each image as illustrated in Figures 7a and 7b. Then the axes d₂ and d₃ between each recording system 31 are determined and the barycenter of the flesh tints of the user's face 10 as illustrated in Figure 6. Knowing the position of each recording system 31, one in relation to the other and in relation to the screen 20, the exact position in space of the intersection I between the axes d₂ and d₃ in relation to the center of the screen is deduced. When the user 10 moves his/her head in a horizontal and/or vertical plane, the coordinates (X₃, Y₃) and (X₄, Y₄) of the barycenter vary which causes a variation of the position of the intersection I between the axes d₂ and d₃. An algorithm is then utilized to modify the image of the object so as to rotate the object by a certain angle corresponding to the user's actual angular variation in relation to the screen so that reality is simulated, or again by another proportion.

According to this embodiment, the variation of the distance between the user and the screen is directly determined by the variation of the position of the intersection I between the two axes d₂ and d₃. Thus, when the user 10 approaches or retreats from the screen 20, the coordinates (X₃, Y₃) and (X₄, Y₄) of the barycenter are modified so that the intersection I is no longer at the same distance from the screen 20. According to the variation of this distance, a new image of the object is generated so that the object appears enlarged or reduced for the user 10. Clearly any characteristic point of the face can be utilized in this embodiment.

Here again, when the user 10 only rotates his/her head in a plane parallel to the screen, the object is not modified. In fact, the barycenter of the flesh tints does not vary.

The device that has been described above is for instance utilized on an interactive terminal that enables the user to be given the illusion of looking at real objects, which are in fact objects displayed on a screen. This device can also be utilized for simulation, for example flight simulation or any other activity.

## Claims

1. A device for displaying an image of an object according to a perspective that depends on the position of a user (10) looking at the image, the device comprising:
a screen (20) intended for displaying the image;
a means (30) for detecting the position of the user (10);
a means (40) for generating an image of the object according to a perspective that depends on the user's position (10) so that the image of the object is modified when the user (10) moves in front of the screen (20);
the means (30) for detecting the user's position (10) comprising:
at least one recording system (31) intended to record the user's image (10);
a means (32) for processing the recorded data so as to determine the variation of the user's (10) position in relation to the screen (20).

2. A device according to Claim 1 wherein the recording system (31) is a digital camera.

3. A device according to Claim 1 or 2 that comprises a single recording system (31), the means (32) for processing the recorded data being a means for determining the position of at least two particular points of the user's image (10).

4. A device according to Claim 1 or 2 that comprises two recording systems (31) that record the user's (10) image according to different angles.

5. A process for displaying an image of an object according to a perspective that depends on the position of a user (10) looking at the image, the process comprising the steps of:
displaying the image of the object on a screen (20);
recording at least one image of the user (10) by means of a recording system (31);
determining the variation in the user's (10) position in relation to the screen (20); and
utilizing an algorithm to enable the image of the object displayed on the screen (20) to be modified according to the variation of the user's (10) position in relation to the screen (20).

6. A process according to Claim 5 wherein the step of determining the variation of the user's (10) position comprises:
the determination of an axis between the screen (20) and a characteristic point of the user's (10) image; and
the determination of the angular variations of the axis;
the utilization of the algorithm to enable the image of the object displayed on the screen (20) to be modified depending on the angular variations of the axis.

7. A process according to Claim 5 or 6, wherein the step of determining the user's (10) position comprises:
the determination of two characteristic points of the user's (10) image; and
the determination of the variations of the distance between the two characteristic points of the user's (10) image;
the utilization of the algorithm to enable the image of the object displayed on the screen (20) to be modified depending on the variations of the distance between the two characteristic points.

8. A process according to Claim 5 or 6, wherein two images of the user (10) are recorded by means of two recording system (31), a process wherein the step of determining the variation of the user's (10) position comprises:
the determination of the intersection of the axes between each recording system (31) and a characteristic point of the user (10); and
the determination of the variations of the position of the intersection of the axes; the utilization of the algorithm to enable the image of the object displayed on the screen (20) to be modified depending on the variations of the position of the intersection of the axes.
